# EUROPÄISCHE PATENTANMELDUNG

(11) **EP 4 628 283 A2**
(43) Veröffentlichungstag der Anmeldung: **08.10.2025**
(21) Anmeldenummer: 25166834.9
(22) Anmeldetag: 27.03.2025
(51) Int. Cl.: B29C 63/42

(54) **VORRICHTUNG ZUM ANBRINGEN MINDESTENS EINES SCHRUMPFSCHLAUCHES**

(30) Priorität: 02.04.2024 DE 202024000637 U
(71) Anmelder: Network Quality Management GmbH, 5412 Puch bei Hallein (AT)
(72) Erfinder: Strasser-Stöckl, Markus, 5412 Puch bei Hallein (AT)
(74) Vertreter: Witzany, Manfred

(57) **Zusammenfassung**

Eine Vorrichtung (1) dient zum Anbringen eines Schrumpfschlauchs (2) an einem Körper (3). Hierzu weist die Vorrichtung (1) eine den Schrumpfschlauch (2) erwärmende Heizung (5) auf. Um eine wiederholgenaue Anbringung des Schrumpfschlauches (2) zu gewährleisten, erwärmt die Heizung (5) den Schrumpfschlauch (3) ausschließlich mittels Strahlungsheizung und berührungslos.

## Beschreibung

Die Erfindung betrifft eine Vorrichtung zum Anbringen mindestens eines Schrumpfschlauches an einem Körper. Um den mindestens einen Schrumpfschlauch zu schrumpfen, weist diese Vorrichtung mindestens eine Heizung auf, die den mindestens einen Schrumpfschlauch erwärmt.

Es ist bekannt, Schrumpfschläuche mittels Heißluftgebläsen zu erwärmen, um die gewünschte Schrumpfwirkung zu erzielen. Daneben werden auch Feuerzeuge und Lötkolben für diesen Zweck genutzt. All diesen Mitteln ist gemeinsam, dass die Erwärmung einseitig und damit ungleichmäßig erfolgt. Außerdem kann auf diese Weise die Temperatur des Schrumpfschlauches nicht präzise kontrolliert werden. Diese Vorgangsweise ist unproblematisch, so lange der Körper, an dem der Schrumpfschlauch angebracht wird, eine höchstens geringe Wärmeempfindlichkeit aufweist. Befinden sich im Körper Lötstellen, so kann die beschriebene Prozedur zum Anbringen des mindestens einen Schrumpfschlauches zur Refluidisierung des Lots und damit zum Trennen der Lötstelle führen. Da Schrumpfschläuche in der Regel undurchsichtig sind, ist eine nachträgliche optische Kontrolle nicht mehr möglich. Dies schränkt die Anwendbarkeit einer Schrumpfschlauch-Verbindung erheblich ein.

Der Erfindung liegt die Aufgabe zugrunde, eine Vorrichtung zum Anbringen mindestens eines Schrumpfschlauches zu schaffen, welche ein erweitertes Anwendungsspektrum besitzt. Insbesondere soll auch bei temperaturempfindlichem Körper eine zuverlässige und insbesondere wiederholgenaue Anbringung des mindestens einen Schrumpfschlauches gewährleistet sein.

Diese Aufgabe wird erfindungsgemäß mit den folgenden Merkmalen gelöst.

Die erfindungsgemäße Vorrichtung dient zum Anbringen mindestens eines Schrumpfschlauches an mindestens einem Körper. Grundsätzlich ist jeder beliebige Körper vorstellbar, wobei insbesondere an Kabel, Steckverbinder und Rohre gedacht ist. Der mindestens eine Schrumpfschlauch benötigt eine vorgegebene Aktivierungstemperatur, bei der er sich zusammenzieht und eng an den mindestens einen Körper anschmiegt. Gegebenenfalls kann der mindestens eine Schrumpfschlauch innenseitig einen thermisch aktivierbaren Klebstoff aufweisen, um eine dichte Verbindung zwischen dem mindestens einen Schrumpfschlauch einerseits und dem mindestens einen Körper andererseits zu gewährleisten. Zur Aktivierung des mindestens einen Schrumpfschlauches weist die Vorrichtung mindestens eine Heizung auf, die in der Lage ist, den mindestens einen Schrumpfschlauch zu erwärmen und auf diese Weise die schrumpfende Wirkung auszulösen. Um einerseits den mindestens einen Schrumpfschlauch vollständig und sicher wenigstens bis zur vorgesehenen Aktivierungstemperatur aufzuheizen und andererseits den mindestens einen Körper vor unnötiger Erwärmung zu schützen, erfolgt die mindestens eine Heizung ausschließlich mittels Strahlungsheizung und damit auch berührungslos. Dies ist so zu verstehen, dass die mindestens eine Heizung weder mittels Kontakt noch mittels erzwungener Fluidströmung den mindestens einen Schrumpfschlauch heizt. Zwischen der mindestens einen Heizung und dem mindestens einen Schrumpfschlauch können jedoch Konvektionsströmungen entstehen, die aber ausschließlich durch einen Temperaturgradienten zwischen beiden angetrieben werden. Auf diese Weise werden Überhitzungen durch Flammen, Anströmpunkte oder Berührungspunkte vermieden, so dass sich der gesamte mindestens eine Schrumpfschlauch innerhalb enger Grenzen auf gleicher Temperatur befindet. Damit kann die Bearbeitungstemperatur des mindestens einen Schrumpfschlauches so gewählt werden, dass sie nur geringfügig über der Aktivierungstemperatur desselben liegt. Der mindestens eine Körper erfährt dabei nur eine geringe thermische Belastung, welche nur knapp über der Aktivierungstemperatur des mindestens einen Schrumpfschlauches liegt. Damit können für den mindestens einen Körper deutlich geringere Anforderungen gestellt werden, was dessen thermische Belastbarkeit betrifft. Neben den im Stand der Technik üblichen PVC-Kabeln können mit dieser Vorrichtung auch Thermoplaste sowie weichgelötete Systeme problemlos eingesetzt werden. Dadurch ergibt sich eine deutliche Ausweitung der Materialauswahl für den mindestens einen Körper, so dass auch exotische Materialien eingesetzt werden können. Dies ist insbesondere im Bereich der Elektromobilität wichtig, wo Kabel mit sehr hoher Strombelastbarkeit mit großer Flexibilität benötigt werden. In diesem Bereich ist es wünschenswert, neben den in der Haus- und Industrieelektrik üblicherweise eingesetzten PVC-isolierten Kabeln thermoplastisch isolierte Kabel mit höherer Flexibilität einzusetzen, um auftretenden Vibrationen zu widerstehen. Dazu muss aber die Erwärmung des mindestens einen Schrumpfschlauches zuverlässig und reproduzierbar unter der Plastifizierungstemperatur des thermoplastischen Polymers bleiben.

Zur Erzielung einer möglichst gleichmäßigen Erwärmung des mindestens einen Schrumpfschlauches ist es vorteilhaft, wenn die mindestens eine Heizung zylinderförmig um den mindestens einen Körper angeordnet ist. Auf diese Weise ergibt sich eine flächige Strahlungsheizung, deren Heizleistung nicht vom Abstand zwischen der Heizungsfläche und dem mindestens einen Schrumpfschlauch abhängt. Damit spielt die Ausrichtung und Anordnung des mindestens einen Körpers in der mindestens einen Heizung keine Rolle, was die Reproduzierbarkeit und Präzision der Schrumpfung des mindestens einen Schrumpfschlauchs deutlich verbessert.

Insbesondere bei Kabeln als mindestens ein Körper ist eine präzise Ausrichtung desselben innerhalb der mindestens einen Heizung schwierig, weil sich der mindestens eine Körper in diesem Fall in der mindestens einen Heizung durchbiegt. Um eine ungleichmäßige Heizwirkung aufgrund einer ungewollten Berührung des mindestens einen Schrumpfschlauches an der mindestens einen Heizung zu vermeiden, ist daher grundsätzlich ein großer Abstand wünschenswert, der jedoch die Heizungsfläche und damit auch den Leistungsbedarf erhöht. Deshalb ist es vorteilhaft, wenn die mindestens eine Heizung grundsätzlich koaxial zum mindestens einen Körper angeordnet ist. Auf diese Weise ergibt sich im Idealfall ein gleicher Abstand des mindestens einen Schrumpfschlauches von der mindestens einen Heizung an allen Seiten, so dass sich eine große Toleranz für Ausrichtungsfehler zwischen beiden einstellt. Unter Berücksichtigung von Durchbiegungen und sonstigen Eigenbewegungen des mindestens einen Körpers befindet sich die mindestens eine Heizung in einem koaxialen Toleranzbereich um den mindestens einen Körper.

Um die mindestens eine Heizung einfach aufbauen zu können, ist sie aus Segmenten ausgebildet, welche in Umfangsrichtung um den mindestens einen zylindrischen Körper angeordnet sind. Dies erleichtert sowohl den konstruktiven Aufbau als auch die Nutzung der Vorrichtung.

Vorzugsweise ist mindestens eines der Segmente radial beweglich angeordnet, so dass die mindestens eine Heizung auf diese Weise radial geöffnet werden kann. Unter "radial beweglich" ist zu verstehen, dass zumindest eine Bewegungskomponente des mindestens einen beweglichen Segments in radialer Richtung erfolgt. Damit sind neben radialen Bewegungen auch Bewegungen mit Komponenten in axialer und UmfangsRichtung möglich. Außerdem ist an Schwenkbewegungen gedacht, die eine radiale Bewegungskomponente enthalten. Damit ist gewährleistet, dass der mindestens eine Körper nicht nur axial, sondern auch radial in die mindestens eine Heizung eingeschoben werden kann. Wird der mindestens eine Schrumpfschlauch im Endbereich des mindestens einen Körpers angebracht, reicht eine axiale Einschiebbarkeit völlig aus. Dies ist auch der Regelfall, da im Endbereich des mindestens einen Körpers oftmals Steckverbinder anzubringen sind. Durch das radiale Öffnen der mindestens einen Heizung kann nun auch mindestens ein Schrumpfschlauch im weiteren Verlauf des mindestens einen Körpers angebracht werden, was die Anwendbarkeit der mindestens einen Vorrichtung noch einmal erweitert.

Zur Erzielung einer definierten Erwärmung des mindestens einen Schrumpfschlauches ist es vorteilhaft, wenn die Verweildauer des mindestens einen zylindrischen Körpers und/oder die Energiezufuhr zur mindestens einen Heizung von mindestens einem Timer zeitgesteuert ist. Diese Zeitsteuerung sorgt insbesondere dafür, dass bei einer Vielzahl von Schrumpfschlauchverbindungen stets die gleiche Endtemperatur erreicht wird, um den mindestens einen Schrumpfschlauch sicher zu aktivieren.

Vorzugsweise wird das mindestens eine bewegliche Segment nach Zeitablauf des mindestens einen Timers geöffnet, wodurch sich die Strahlungsleistung der mindestens einen Heizung reduziert und dem Bediener angezeigt wird, dass die Schrumpfverbindung abgeschlossen ist.

Zur Erzielung der gewünschten Bewegung des mindestens einen beweglichen Segments ist dieses vorzugsweise motorisch angetrieben. Damit kann die Steuerung sehr einfach auf dieses mindestens eine bewegliche Segment einwirken.

Alternativ kann das mindestens eine bewegliche Segment auch federnd in eine öffnende Stellung vorgespannt sein, wobei es in einer geschlossenen Stellung arretierbar ist. Damit muss der mindestens eine Timer das mindestens eine bewegliche Segment nicht selbst bewegen, sondern lediglich die Arretierung desselben aufheben, was deutlich weniger Aufwand ist.

Um Heizleistung einzusparen, ist es günstig, wenn wenigstens ein Teil der mindestens einen Heizung außenseitig mit mindestens einer Wärmeisolation versehen ist. Diese mindestens eine Wärmeisolation reduziert die Abstrahlung der Heizfläche nach außen, so dass sie im Idealfall nur etwas mehr als die Hälfte der ohne Wärmeisolation benötigen Heizleistung anlegen muss.

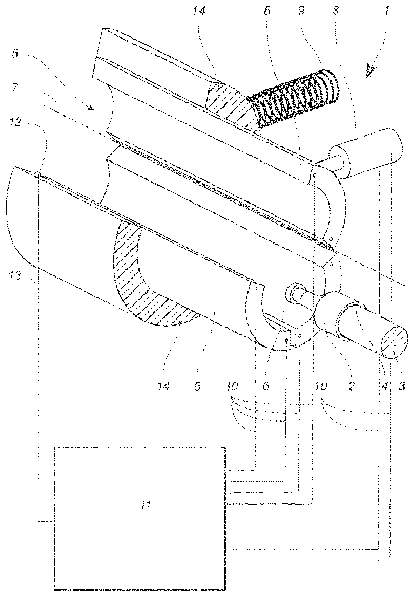

Der Erfindungsgegenstand wird beispielhaft anhand der Zeichnung erläutert, ohne den Schutzumfang zu beschränken.

Die einzige Figur zeigt eine räumliche Prinzipdarstellung einer Vorrichtung 1 zum Anbringen eines Schrumpfschlauches 2 an einem Körper 3. Der Körper 3 ist dabei lediglich beispielhaft als Kabel mit einem endseitigen Stecker dargestellt. Es sind aber auch andere Konfigurationen für den Körper 3 möglich. Der Schrumpfschlauch 2 weist innenseitig eine thermisch aktivierbare Klebeschicht 4 auf, die durch Aufschmelzen und anschließendes Erstarren eine dichte Verbindung zwischen dem Schrumpfschlauch 2 und dem Körper 3 bildet.

Die Vorrichtung 1 weist eine Heizung 5 auf, die von drei Segmenten 6 gebildet ist. Zwei der Segmente 6 sind dabei ortsfest angebracht, während das dritte Segment 6 um eine Schwenkachse 7 verschwenkbar angeordnet ist. Beispielsweise kann die Schwenkachse 7 von einem nicht dargestellten Scharnier gebildet sein. Das schwenkbare Segment 6 ist von einem Motor 8 angetrieben, der es zwischen einer dargestellten Offenstellung und einer nicht dargestellten Geschlossenstellung verschwenken kann. In der Geschlossenstellung ergänzen sich die Segmente 6 zu einem Hohlzylinder. Alternativ oder zusätzlich steht das bewegbare Segment 6 mit einer Feder 9 in Wirkverbindung, welche dieses Segment in die dargestellte Offenstellung vorspannt.

Jedes Segment 6 ist über Leitungen 10 mit einem Timer 11 verbunden, der auch den Motor 8 steuert. Ein Endschalter 12 im Bereich eines der Segmente 6 registriert das Schließen des bewegbaren Segments 6 und übermittelt dies über eine Leitung 13 dem Timer 11. Dieser Timer 11 versorgt die Heizung 5 mit einer voreingestellten Heizleistung, was durch Schließen des Endschalters 12 ausgelöst wird. Nach Ablauf einer voreingestellten Zeit im Timer 11 wird die Heizleistung an der Heizung 6 durch den Timer abgeschaltet oder auf einen Ruhewert reduziert. Außerdem wird der Motor 8 angesteuert, um das bewegbare Segment 6 zu öffnen.

Durch das Öffnen des bewegbaren Segments 6 wird einerseits die Heizleistung in der Heizung 5 reduziert und andererseits ein radiales Einführen und Entnehmen des Körpers 3 ermöglicht. Es ist aber auch daran gedacht, dass der Timer 11 entweder nur den Motor 8 oder nur die Heizung 5 steuert. Je nach Anwendungsfall kann dies ausreichend sein.

Um Wärmeverluste klein zu halten, sind die Segmente 6 außenseitig von einer hohlzylinderförmigen Wärmeisolation 14 umgeben. Diese Wärmeisolation 14 umschließt die Segmente 6 der Heizung 5 vollständig, wobei sie im Bereich des beweglichen Segments 6 so geformt ist, dass ein ungehindertes Öffnen und Schließen desselben ermöglicht ist. Lediglich zur besseren Sichtbarkeit der einzelnen Teile ist die Wärmeisolation 14 nur im Teilbereich dargestellt.

### Bezugszeichenliste

- 1: Vorrichtung
- 2: Schrumpfschlauch
- 3: Körper
- 4: Klebeschicht
- 5: Heizung
- 6: Segment
- 7: Schwenkachse
- 8: Motor
- 9: Feder
- 10: Leitung
- 11: Timer
- 12: Endschalter
- 13: Leitung
- 14: Wärmeisolation

## Patentansprüche

1. Vorrichtung zum Anbringen mindestens einen Schrumpfschlauches (2) an mindestens einem Körper (3), wobei die Vorrichtung mindestens eine den mindestens einen Schrumpfschlauch (2) erwärmende Heizung (5) aufweist, **dadurch gekennzeichnet, dass** die mindestens eine Heizung (5) den mindestens einen Schrumpfschlauch (2) ausschließlich mittels Strahlungsheizung berührungslos erwärmt.

2. Vorrichtung nach Anspruch 1, **dadurch gekennzeichnet, dass** die mindestens eine Heizung (5) zylinderförmig um den mindestens einen Körper (3) angeordnet ist.

3. Vorrichtung nach Anspruch 2, **dadurch gekennzeichnet, dass** die mindestens eine Heizung (5) in einem koaxialen Toleranzbereich zum mindestens einen Körper (3) angeordnet ist.

4. Vorrichtung nach mindestens einem der Ansprüche 1 bis 3, **dadurch gekennzeichnet, dass** die mindestens eine Heizung (5) aus Segmenten (6) besteht, welche in Umfangsrichtung um den mindestens einen Körper (3) angeordnet sind.

5. Vorrichtung nach Anspruch 4, **dadurch gekennzeichnet, dass** mindestens eines der Segmente (6) radial beweglich ist.

6. Vorrichtung nach mindestens einem der Ansprüche 1 bis 5, **dadurch gekennzeichnet, dass** die Verweildauer des mindestens einen Körpers (3) und/oder die Energiezufuhr zur mindestens einen Heizung (5) von mindestens einem Timer (11) zeitgesteuert ist.

7. Vorrichtung nach Anspruch 5 und 6, **dadurch gekennzeichnet, dass** das mindestens eine bewegliche Segment (6) nach Zeitablauf des mindestens einen Timers (11) geöffnet wird.

8. Vorrichtung nach mindestens einem der Ansprüche 5 bis 7, **dadurch gekennzeichnet, dass** das mindestens eine bewegliche Segment (6) motorisch angetrieben ist.

9. Vorrichtung nach mindestens einem der Ansprüche 5 bis 7, **dadurch gekennzeichnet, dass** das mindestens eine bewegliche Segment (6) federnd in eine geöffnete Stellung vorgespannt und in einer geschlossenen Stellung arretierbar ist.

10. Vorrichtung nach mindestens einem der Ansprüche 1 bis 9, **dadurch gekennzeichnet, dass** wenigstens ein Teil der mindestens einen Heizung (5) außenseitig eine Wärmeisolation aufweist.
